# DEMANDE DE BREVET EUROPEEN

(11) **EP 2 151 785 A1**
(43) Date de publication de la demande: **10.02.2010**
(21) Numéro de dépôt: 08305442.9
(22) Date de dépôt: 31.07.2008
(51) Int. Cl.: G06F 21/20

(54) **Procédé et dispositif d'authentification parcellaire et non réversible**

(71) Demandeur: GEMPLUS, 13420 Gémenos (FR)
(72) Inventeur: Rouchouze, M. Bruno, 83270, Saint Cyr sur Mer (FR)

(57) **Abrégé**

La présente invention décrit un procédé et un dispositif automatisé d'authentification d'une pluralité d'ensemble de points caractéristiques candidats, vis à vis d'un nuage de points de référence. Les points constitutifs de ce nuage de points n'étant pas distinguables les uns des autres afin de reconstituer des données biométriques.
La comparaison des données candidates avec le nuage de référence se fait de manière parcellaire, sans reconstituer un nuage candidat.

## Description

L'invention concerne l'identification biométrique d'un utilisateur d'un système. Elle est particulièrement adaptée à une vérification d'identité dans un système incluant un serveur

Une méthode couramment utilisée pour l'identification d'un utilisateur repose sur un code d'identification secret également appelé PIN (pour Personal Identification Number en anglais). Dans un système utilisant des cartes à puce, un utilisateur saisit son PIN code sur un terminal de transaction, qui transfère alors le PIN code saisi vers la carte à puce qui effectue la vérification du PIN code par comparaison avec un PIN code de référence. La sécurité d'un tel système est garantie par le fait que le PIN code de référence est mémorisé au sein de la carte à puce, par nature sécurisée, et n'en sort jamais au cours du procédé de vérification d'identité, puisque la vérification finale est effectuée par la carte.

Un tel système a pour inconvénients le fait que le propriétaire de la carte doit mémoriser un secret et le fait qu'un autre utilisateur peut frauder en volant ce secret. La biométrie consiste à acquérir, mesurer et reconnaître des caractéristiques physiques d'un utilisateur. Elle permet d'identifier directement un utilisateur alors que la méthode par PIN code permet une identification indirecte par le fait de vérifier que l'utilisateur connaît un secret. Parmi les techniques connues en biométrie, on dénote les méthodes de reconnaissance des caractéristiques vocales, des caractéristiques propres à la forme du visage ou à l' iris de l'oeil ou, dans le cas le plus fréquent, des caractéristiques d'empreintes digitales.

Tous les procédés et systèmes de vérification d'identité biométrique existant se décomposent en trois phases :
- la première phase est une phase de capture de données biométriques à partir d'un capteur. Ces données biométriques obtenues sont le plus souvent des images, par exemple dans les cas d'empreintes digitales, d'iris ou de forme du visage. Mais il peut également s'agir de séquences sonores dans le cas de reconnaissances vocales.
- la deuxième phase est une phase d'analyse ou d'extraction permettant d'extraire une signature biométrique à partir des données biométriques capturées lors de la première phase, cette signature se composant d'un ensemble plus restreint de données biométriques particulières. Cette seconde phase est extrêmement complexe et nécessite une grande puissance de calcul.
- la troisième phase consiste à comparer la signature biométrique obtenue lors de la seconde phase avec une signature de référence définie auparavant lors d'une procédure appelée enrôlement.

Ces méthodes existantes se trouvent confronter à un problème majeur qui est celui du stockage de la signature de référence.

Des contraintes évidentes de respect de la vie privée limitent au maximum la création de bases de données rassemblant de tels enregistrements en clair. La crainte majeure étant l'utilisation qui pourrait être faites de telles bases de données si elles venaient à être divulguées par négligence ou suite a des actions manifestement malveillantes.

Les solutions pour répondre à cette problématique on été nombreuses :

Le chiffrement des données stockées dans les bases de données permet de limiter le risque de fuite d'information, mais sans pour autant se prémunir d'une action frauduleuse faite avec une complicité au sein même de l'organisme détenant la base en question, voire même une action frauduleuse réalisée par l'établissement lui-même.

De plus, les augmentations constantes des performances des systèmes informatiques ne permettent pas de considérer la difficulté d'un cryptage comme une barrière infranchissable a long et moyen terme.

L'utilisation de dispositifs portables indépendants, comme des cartes à puce, permet de résoudre en partie le problème. En effet, dans ce système, chaque utilisateur porte avec lui son empreinte de référence, et aucun support ne rassemble la totalité des données.

La contrepartie est que le diapositif portable contenant la référence est indispensable à toute tentative d'authentification. Ce qui pose des problèmes dans la mise en place de systèmes de sécurité centralisés.

La présente invention vise à pallier ces inconvénients de proposer un système de d'authentification biométrique centralisable sans pour autant porter atteinte a la vie privée des utilisateurs.

Pour cela, la présente invention est un procédé d'enrôlement mettant en oeuvre au moins deux ensembles de points caractéristiques, chacun représentatif d'une donnée biométrique, ces points caractéristiques étant appelés minuties, ledit procédé d'enrôlement comprend au moins :
- une étape d'extraction, au cours de laquelle, pour chacun des ensembles de points caractéristiques, un sous ensemble est créé par application d'au moins un algorithme de sélection
- une étape de fusion par laquelle les points caractéristiques composant les sous ensembles sont rassemblés par application d'au moins un algorithme de fusion pour créer le nuage de points dit de référence, de manière qu'il ne soit pas possible, en analysant ce nuage, de distinguer tout ou partie des sous ensembles.

Selon une variante, l'algorithme de sélection comprend les étapes de :
- sélection d'un nombre NbMaxPts prédéfini de points distants, les uns des autres, d'au minimum une distance AsserLoin prédéfinie.

Selon une variante, l'algorithme de fusion comprend l'étape de :
- Exclusion de points distants de au plus une distance TropPret prédéfinie.

La présente invention concerne également un procédé d'authentification mettant en oeuvre un nuage de points, et au moins deux ensembles de points caractéristiques, chacun représentatif d'une donnée biométrique, ces points caractéristiques étant appelés minuties, comprenant au moins une étape de capture et une étape de comparaison, l'étape de capture comprend les étapes de :
- capture d'au moins deux données biométriques dites candidates,
   pour chacune des données biométriques candidates :
- extraction d'un ensemble de points caractéristiques dit candidats
- application sur les points caractéristiques candidats de l'algorithme de sélection afin d'obtenir un sous ensemble de points caractéristiques.

Selon une variante, l'algorithme de sélection comprend les étapes de :
- Sélection d'un nombre NbMaxPts prédéfini de points distants, les uns des autres, d'au minimum une distance AsserLoin prédéfinie.

Dans un mode d'implémentation l'étape de comparaison comprend les étapes de :
- comparaison d'un des sous ensembles de points caractéristiques candidat, avec le nuage de référence selon au moins un algorithme de comparaison
- marquage des points du nuage de référence ayant été identifiés positivement par ladite comparaison
- comparaison des points caractéristiques du sous ensemble candidat suivant, avec les points non marqués dudit nuage de référence selon au moins un algorithme de comparaison
- marquage des points du nuage de référence ayant été identifiés positivement par ladite comparaison
   et ainsi de suite pour chacun des sous ensembles de points caractéristiques candidats
- évaluation des valeurs obtenues selon au moins un algorithme de décision.

La présente invention concerne également un dispositif d'enrôlement possédant un processeur et au moins une mémoire de travail et une mémoire non volatile, étant relié à un dispositif de capture de données biométrique apte a lui fournir au moins deux ensembles de points caractéristiques, chacun représentatif d'une donnée biométrique, lesdits points caractéristiques étant appelés minuties , ce dispositif d'enrôlement :
- possède des moyens pour extraire, avec l'aide du processeur, de chacun desdits ensembles de points caractéristiques, un sous ensemble par application d'au moins un algorithme de sélection, et l'enregistrement des sous ensembles dans une mémoire de travail
- possède des moyens pour fusionner, avec l'aide du processeur, les points caractéristiques composant les sous ensembles en un nuage de points dit de référence par application d'au moins un algorithme de fusion, afin qu'il ne soit pas possible, en analysant le nuage, de distinguer tout ou partie des sous ensembles, et l'enregistrement du nuage de points dans une mémoire la volatile.

La présente invention concerne également un dispositif d'authentification possédant un processeur et au moins une mémoire de travail, l'accès à au moins une mémoire non volatile, ledit dispositif d'authentification étant relié à un dispositif de capture de données biométrique, ce dispositif d'authentification possède :
- des moyens pour obtenir du dispositif de capture au moins deux données biométriques dites candidates et les enregistrer dans la mémoire de travail
- des moyens pour extraire, avec l'aide du processeur, un ensemble de points caractéristiques dit candidats de chacune des données biométriques candidates, et les enregistrer dans la mémoire de travail
- des moyens pour appliquer, avec l'aide du processeur, sur les points caractéristiques candidats au moins un algorithme de sélection, et enregistrer le sous ensemble obtenu dans la mémoire de travail,
- des moyens pour lire un nuage de points dit de référence dans la mémoire non volatile, et l'enregistrer dans la mémoire de travail,
   pour chacun desdits sous ensembles de points caractéristiques candidats :
- des moyens pour comparer, avec l'aide du processeur, un des sous ensembles de points caractéristiques candidat, avec les points non marqués dudit nuage de référence selon au moins un algorithme de comparaison
- des moyens pour marquer les points du nuage de référence ayant été identifiés positivement par la comparaison, et enregistrer ledit marquage dans la mémoire de travail
- des moyens pour évaluer, avec l'aide dudit processeur, les valeurs obtenues selon au moins un algorithme de décision.

D'autres caractéristiques et avantages de l'invention ressortiront clairement de la description qui en est faite ci-après, à titre indicatif et nullement limitatif, en référence aux dessins annexés dans lesquels :
- La figure 1 représente une procédure d'enrôlement selon l'invention.
- La figure 2 représente une authentification selon l'invention
- La figure 3 représente un exemple de paramètres pouvant entrer en compte dans la prise de décision finale du résultat de l'authentification.

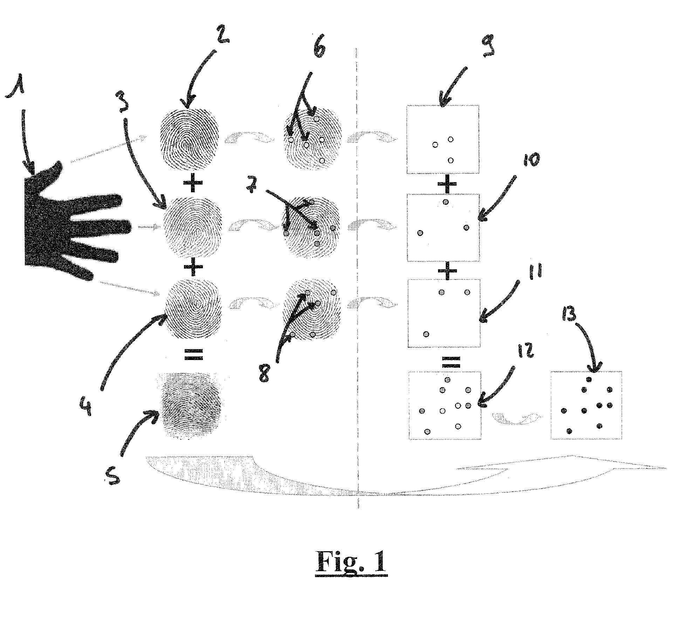

Dans la figure 1, un utilisateur 1 procède à un enrôlement conforme à une implémentation de la présente invention.

Plusieurs données biométriques 2, 3 et 4 sont capturées. Dans la présente implémentation, les différentes données biométriques sont des empreintes digitales, mais toute donnée biométrique peut être utilisée. Dans un mode particulièrement avantageux d'implémentation de l invention, les différentes données biométriques sont de natures différentes, par exemple un scanner rétinien, une empreinte digitale, et une analyse morpho-faciale.

L'ensemble de ces données est envoyé à un dispositif électronique mettant en oeuvre l'invention. L'étape d'enrôlement peut, par exemple être réalisée par un ordinateur fixe de type « serveur ». L'utilisation d'un dispositif portable est tout a fait envisageable.

La donnée 2 est analysée par le processeur du serveur, et un ensemble de points caractéristiques 6 est extrait, et enregistré dans une mémoire de travail, par exemple de la RAM (Random Access Memory). De la même façon un ensemble 7 de points caractéristiques est extrait de la donnée biométrique 3, et un ensemble 8 de la données biométrique 4.

Dès lors, chacun de ces ensembles de points caractéristiques est analysé une nouvelle fois par le processeur, mais cette fois avec l'aide d'un algorithme d'extraction, le but étant d'obtenir des sous ensembles de points ayant des propriétés remarquables.

Un algorithme d'extraction peut par exemple consister en la sélection d'un nombre de donné (NbMaxPts points séparés entre eux d'une distance minimale (AsserLoin). Mais tout algorithme capable de sélectionner un sous ensemble de points est applicable. Par exemple un autre type d'algorithme peut consister en l'étude de plusieurs saisies consécutives de la donnée 2, et en la sélection des seuls points présents sur toutes les données. Un autre algorithme pourrait sélectionner aléatoirement un nombre fini de points parmi ceux constituant l'ensemble 6.

Le résultat de l'application de un ou plusieurs algorithmes d'extraction permet d'obtenir un sous ensemble 9 de points caractéristiques, issus de 1 ensemble 6. Ce sous ensemble est a son tour stocké en mémoire de travail.

De même les sous ensembles 10 et 11 sont respectivement issus des ensembles 7 et 8, et enregistrés.

Maintenant il est possible de fusionner ces sous ensembles pour obtenir un nuage de points 12, comportant les points de tous les sous ensembles 9, 10 et 11.

Cette fusion se fait par l'application, dans le processeur, d'au moins un algorithme de fusion, sur les données 9, 10 et 11 mémorisées. Tous les algorithmes permettant de regrouper des ensembles indépendants de points en un seul et unique nouvel ensemble est applicable. Un exemple d'algorithme, peut consister en une simple copie des points, et en l'exclusion des points qui ne sont pas distants d'une distance (TropPret) définie.

Un autre exemple d'algorithme plus complexe peut par exemple associer des rotations de chacun des ensembles lors de leur fusion. Une autre alternative peut consister en la définition, calculée ou aléatoire de points qui serviront de « centres » à chacun des ensembles de points, lors de leur fusion. Un mode particulièrement intéressant d'implémentation de 1 invention consiste en l'application de plusieurs algorithmes de fusion.

Cette opération de fusion permet d'obtenir un nuage 12 de points correspondant aux différents ensembles 9, 10 et 11.

Une fois enregistré dans une mémoire non volatile, sans les ensembles 6, 7 et 8 ni les sous ensembles 9 10 et 11, on obtient un nuage 13 de points dans lequel il n'est pas possible de différencier les ensembles de points ayant permis de le constituer. Cette caractéristique permet de stoker une signature biométrique de référence, sans qu'il soit pour autant possible de remonter à l'utilisateur 1. Le nuage de point 13 constitue une signature biométrique virtuelle, correspondant à une donnée biométrique 5 qui n'existe pas réellement.

L'enrôlement de l'utilisateur 1 se termine donc par l'enregistrement du nuage de points dans une mémoire non volatile. Selon un mode d'implémentation de l'invention, ce stockage peut se faire sur le serveur qui a été utilisé pour l'enrôlement, voire dans un autre serveur centralisé distant. Selon un autre mode d'implémentation, le nuage de points peut être stocké de manière répartie, par exemple dans un dispositif électronique portable individuel ou collectif. Ce dispositif pouvant être, de manière avantageuse, une carte à puce.

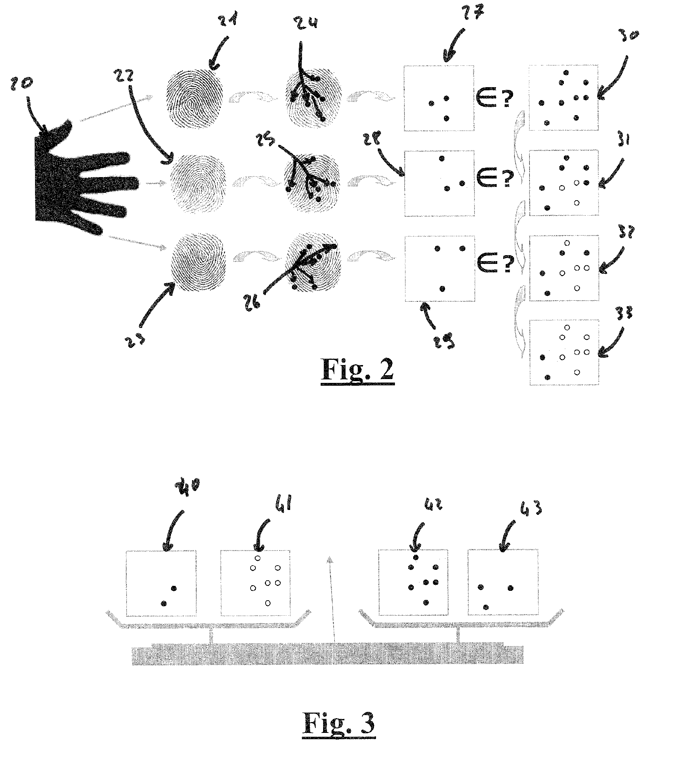

La figure 2 nous présente une étape d'authentification conforme à un mode d'implémentation de la présente invention.

Un candidat 20 se présente pour l'authentification. Plusieurs données biométriques 21, 22 et 23 sont alors capturée et analysées afin d'un obtenir les points caractéristiques 24, 25 et 26 correspondant.

Dans un mode particulièrement avantageux de l'invention, les données biométriques capturées sont de la même nature que celles qui ont servi à composer la signature de référence qui va servir à l'authentification. En effet il semble opportun que l'authentification se fasse de manière prédéfinie sur un scanner rétinien, un empreinte digitale et une analyse morpho-faciale, par exemple. Toutefois il est envisageable d'implémenter l'invention en laissant l'utilisateur choisir les données biométriques qu'il souhaite fournir. Cette implémentation ajoute encore a l'authentification, la mémoire des données ayant servi à 1 enrôlement, information difficile à obtenir par un éventuel usurpateur. Cette implémentation parait particulièrement intéressante dans le cas ou plusieurs doigts d'une même main ont servi, mais ils ne sont pas identifiés formellement.

Une fois les données biométriques 21, 22 et 23 saisies, elles sont entrées dans le dispositif électronique mettant en oeuvre l'invention. Dans un mode particulièrement avantageux de mise en oeuvre de l'invention, le dispositif électronique est portable, de type agenda électronique ou ordinateur de poche. Ce type de dispositif électronique portable permet de procéder à une authentification au plus prés des usagers. La contrainte majeure du dispositif est de pouvoir accéder à une signature biométrique de référence. Dans le cas ou les signatures de références sont présentes sur un serveur, le dispositif doit pouvoir communiquer avec celui-ci pour obtenir la signature de référence. Dans le cas ou la signature de référence est enregistrée sur un dispositif autonome de stockage (du genre carte à puce), le dispositif doit disposer de moyens d'interrogation de ces dispositifs de stockage.

Dans le contexte d'une implémentation de l'invention pour gérer tout ou partie de la sécurité d'un site, l'authentification peut se faire directement sur le serveur au travers de terminaux disposes aux endroits nécessitants des authentifications, et relayant les données biométriques saisies vers le serveur central.

Les données biométriques 21, 22 et 23 sont analysées afin d'obtenir pour chacune un ensemble de points caractéristiques, respectivement 24, 25 et 26, qui sont enregistrés dans une mémoire de travail du dispositif.

Ces ensembles sont analysés avec l'aide de au moins d'un algorithme d'extraction, afin d'isoler pour chacun des ensembles, un sous ensemble de points 27, 28 et 29, enregistrés dans une mémoire de travail du dispositif.

Le ou les algorithmes d'extraction utilisés doivent être les mêmes que ceux utilisés lors de 1 étape d'enrôlement.

Dès lors, l'étape de comparaison proprement dite peut commencer.

Le nuage de référence de la personne que prétend être le candidat est mise en mémoire de travail, depuis sa mémoire de stockage.

Une étape de vérification que chacun des points constituant ce nuage sont dépourvu de marque, voire même d'effacement d'éventuelles marques, peut être utile selon le mode d'implémentation de l'invention.

Chacun des sous ensembles 27, 28 et 29 est comparé aux points non marqués du nuage de référence 30.

Dans l'illustration de la figure 2, le sous ensemble 27 est comparé au nuage de points 30. Les points concordants sont marqués, on obtient un nuage de points 31 dont trois points sont marqués.

Le sous ensemble suivant 28 est comparé a ce nuage 31, et les points concordants sont a leur tour marqués afin d'obtenir le nuage de points 32 dont cinq points sont marqués.

Le dernier sous ensemble 29 est comparé a ce nuage 32 et les points concordants sont marqués, on obtient un nuage de points 33 dont sept points sont marqués.

La décision finale se fait par l'application de au moins un algorithme de décision qui va par exemple prendre en compte le nombre de points marqués par rapport au nombre de point total du nuage de référence.

Un exemple d'algorithme de décision peut mettre en rapport, comme illustré dans la figure 3, d'un coté le nombre de points marqués 41 et le nombre de points non marqués, et d'un autre coté le nombre de points marqués 42 et le nombre de points 43 des sous ensembles 27, 28 et 29 n'ayant pas été retrouvés dans le nuage de points de référence.

Des coefficients peuvent permettre d'obtenir une précision plus grande. Cette étape permet de décider si l'utilisateur 20 est ou non authentifier comme tant la personne qu'il prétend être et qui a enregistré le nuage de points de référence 30 lors d'une étape antérieure d'enrôlement.

## Revendications

1. Procédé d'enrôlement mettant en oeuvre au moins deux ensembles de points caractéristiques (6, 7, 8), chacun représentatif d'une donnée biométrique (2, 3, 4), lesdits points caractéristiques étant appelés minuties, **caractérisé en ce que** ledit procédé d'enrôlement comprend au moins :
- une étape d'extraction, au cours de laquelle, pour chacun desdits ensembles de points caractéristiques (6, 7, 8), un sous ensemble (9, 10, 11) est créé par application d'au moins un algorithme de sélection
- une étape de fusion par laquelle les points caractéristiques composant lesdits sous ensembles (9, 10, 11) sont rassemblés par application d'au moins un algorithme de fusion pour créer un nuage de points (13) dit de référence, de manière qu'il ne soit pas possible, en analysant ledit nuage (13), de distinguer tout ou partie desdits sous ensembles (9, 10, 11).

2. Procédé d'authentification selon la revendication 1 **caractérisé en ce que** ledit algorithme de sélection comprend les étapes de :
Sélection d'un nombre NbMaxPts prédéfini de points distants, les uns des autres, d'au minimum une distance AsserLoin prédéfinie.

3. Procédé d'authentification selon l'une des revendications 1 ou 2 **caractérisé en ce que** ledit algorithme de fusion comprend l'étape de :
- exclusion de points distants de au plus une distance TropPret prédéfinie.

4. Procédé d'authentification mettant en oeuvre un nuage de points (30), et au moins deux ensembles de points caractéristiques (24, 25, 26), chacun représentatif d'une donnée biométrique (21, 22, 23), lesdits points caractéristiques étant appelés minuties, comprenant au moins une étape de capture et une étape de comparaison, **caractérisé en ce que** ladite étape de capture comprend les étapes de :
- capture d'au moins deux données biométriques dites candidates (21, 22, 23)
pour chacune dédites données biométriques candidates
- extraction de un ensemble de points caractéristiques dit candidats (24, 25, 26)
- application sur lesdits points caractéristiques candidats d'au moins un algorithme de sélection afin d'obtenir un sous ensemble de points caractéristiques (27, 28, 29).

5. Procédé d'authentification selon la revendication 4 **caractérisé en ce que** ledit algorithme de sélection comprend les étapes de :
- sélection d'un nombre NbMaxPts prédéfini de points distants, les uns des autres, d'au minimum une distance AsserLoin prédéfinie.

6. Procédé d'authentification selon l'une des revendications 4 ou 5, **caractérisé en ce que** ladite étape de comparaison comprend les étapes de :
- comparaison de un desdits sous ensemble de points caractéristiques candidats (27, 28, 29), avec ledit nuage de référence (30) selon au moins un algorithme de comparaison
- marquage des points du nuage de référence (30) ayant été identifiés positivement par ladite comparaison
- comparaison des points caractéristiques du sous ensemble candidat suivant, avec les points non marqués dudit nuage de référence (31, 32, 33) selon au moins un algorithme de comparaison
- marquage des points du nuage de référence (31, 32, 33) ayant été identifiés positivement par ladite comparaison
et ainsi de suite pour chacun des sous ensembles de points caractéristiques candidats (27, 28, 29)
- évaluation du nombre de points du nuage de référence (33) n'ayant pas été marqués (40).

7. Dispositif d'enrôlement possédant un processeur et au moins une mémoire de travail et une mémoire non volatile, étant relié à un dispositif de capture de données biométrique apte a lui fournir au moins deux ensembles de points caractéristiques (6, 7, 8), chacun représentatif d'une donnée biométrique (2, 3, 4), lesdits points caractéristiques étant appelés minuties , **caractérisé en ce que**
- il possède des moyens pour extraire, avec l'aide dudit processeur, de chacun desdits ensembles de points caractéristiques (6, 7, 8), un sous ensemble (9, 10, 11) par application d'au moins un algorithme de sélection, et l'enregistrement desdits sous ensembles dans une mémoire de travail
- il possède des moyens pour fusionner, avec l'aide dudit processeur, les points caractéristiques composant lesdits sous ensembles (9, 10, 11) en un nuage de points (13) dit de référence par application d'au moins un algorithme de fusion, afin qu'il ne soit pas possible, en analysant ledit nuage (13), de distinguer tout ou partie desdits sous ensembles (9, 10, 11), et l'enregistrement dudit nuage de points dans ladite mémoire non volatile.

8. Dispositif d'authentification possédant un processeur et au moins une mémoire de travail, l'accès à au moins une mémoire non volatile, ledit dispositif d'authentification étant relié à un dispositif de capture de données biométrique, **caractérisé en ce que** ledit dispositif d'authentification possède :
- des moyens pour obtenir dudit dispositif de capture au moins deux données biométriques (21, 22, 23) dites candidates et les enregistrer dans ladite mémoire de travail
- des moyens pour extraire, avec l'aide dudit processeur, un ensemble de points caractéristiques (24, 25, 26) dit candidats de chacune dédites données biométriques candidates (21, 22, 23), et les enregistrer dans ladite mémoire de travail
- des moyens pour appliquer, avec l'aide dudit processeur, sur lesdits points caractéristiques candidats (24, 25, 26) au moins un algorithme de sélection, et enregistrer les sous ensembles (27, 28, 29) obtenu dans ladite mémoire de travail,
- des moyens pour lire un nuage de points (30) dit de référence dans ladite mémoire non volatile, et l'enregistrer dans la mémoire de travail,
pour chacun desdits sous ensembles de points caractéristiques candidat (27, 28, 29):
- des moyens pour comparer, avec l'aide dudit processeur, un desdits sous ensemble de points caractéristiques candidat (27, 28, 29), avec les points non marqués dudit nuage de référence (30, 31, 32, 33) selon au moins un algorithme de comparaison
- des moyens pour marquer les points du nuage de référence (30, 31, 32, 33) ayant été identifiés positivement par ladite comparaison, et enregistrer ledit marquage (30, 31, 32, 33) dans ladite mémoire de travail
- des moyens pour évaluer, avec l'aide dudit processeur, la quantité de points du nuage de référence n'ayant pas été marqués (40) au regard du nombre totale de points composant ledit nuage de référence (30).
